# FASCICULE DE BREVET EUROPEEN

(11) **EP 2 711 243 B1**
(45) Date de publication et mention de la délivrance du brevet: **19.08.2015**
(21) Numéro de dépôt: 13185447.3
(22) Date de dépôt: 20.09.2013
(51) Int. Cl.: B60N 2/48

(54) **Appui-tête de siège de véhicule automobile**
Kopfstütze für Kraftfahrzeugsitz
Headrest for an automobile seat

(30) Priorité: 25.09.2012 FR 1259008
(43) Date de publication de la demande: 26.03.2014
(73) Titulaire: CENTRE D'ETUDE ET DE RECHERCHE POUR L'AUTOMOBILE (CERA), 51100 Reims (FR)
(72) Inventeur: Bonfils, Xavier, 51100 Reims (FR)
(74) Mandataire: Sayettat, Julien Christian

(56) Documents cités:
- EP-A2- 0 188 732
- DE-A1- 10 126 427
- KR-A- 20070 061 335

## Description

L'invention concerne un appui-tête de siège de véhicule automobile.

Il est connu, notamment des documents EP 0 188 732 A2, KR 2007 0061335 A, WO-2010/024561, de réaliser un appui-tête de siège de véhicule automobile, ledit appui-tête comprenant une armature, ladite armature comprenant une base et une partie mobile solidaire d'un coussin d'appui, ladite partie mobile étant reliée à ladite base par un dispositif de réglage selon une pluralité de positions longitudinales s'étendant entre une position extrême arrière et une position extrême avant, ledit dispositif étant agencé pour permettre, par traction exercée par l'utilisateur, le coulissement vers l'avant de ladite partie mobile et pour empêcher, au moyen d'une pièce de blocage s'appuyant sur une rampe, un retour de ladite partie mobile vers l'arrière, ledit dispositif étant en outre agencé de sorte que ladite partie mobile puisse être tirée vers une position de déverrouillage située au delà de la position extrême avant, la mise en position de déverrouillage activant un moyen de maintien de ladite pièce de blocage à distance de ladite rampe, de manière à permettre un retour de ladite partie mobile en position extrême arrière.

La base est destinée à être solidaire du dossier du siège, par exemple par l'intermédiaire de tiges sur lesquelles coulisse l'armature pour permettre un réglage en hauteur de l'appui-tête.

Avec un tel agencement, le réglage longitudinal de l'appui-tête se fait par traction effectuée par l'utilisateur, notamment sur son coussin.

Cet agencement permet également de ramener la partie mobile de l'appui-tête depuis une position de réglage extrême avant vers une position de réglage extrême arrière de façon particulièrement intuitive et ergonomique, l'utilisateur ayant simplement à effectuer une ultime traction de ladite partie mobile vers l'avant pour réaliser cette opération.

Cependant, se présente avec un tel agencement le risque que, en cas de décélération brutale du véhicule en situation d'accident, la partie mobile soit projetée par inertie vers l'avant, ce qui se traduit par son retour en position extrême de réglage arrière, position qui n'est pas favorable en terme de sécurité de l'occupant du siège puisque le coussin doit être situé au plus près de sa tête pour limiter les risques de blessure cervicale.

L'invention a pour objet de pallier cet inconvénient.

A cet effet, et selon un premier aspect, l'invention propose un appui-tête de siège de véhicule automobile, ledit appui-tête comprenant une armature, ladite armature comprenant une base et une partie mobile solidaire d'un coussin d'appui, ladite partie mobile étant reliée à ladite base par un dispositif de réglage selon une pluralité de positions longitudinales s'étendant entre une position extrême arrière et une position extrême avant, ledit dispositif étant agencé pour permettre, par traction exercée par l'utilisateur, le coulissement vers l'avant de ladite partie mobile et pour empêcher, au moyen d'une pièce de blocage s'appuyant sur une rampe, un retour de ladite partie mobile vers l'arrière, ledit dispositif étant en outre agencé de sorte que ladite partie mobile puisse être tirée vers une position de déverrouillage située au delà de la position extrême avant, la mise en position de déverrouillage activant un moyen de maintien de ladite pièce de blocage à distance de ladite rampe, de manière à permettre un retour de ladite partie mobile en position extrême arrière, ledit moyen de maintien étant pourvu d'une masselotte d'inertie agencée pour le déplacer en cas de décélération brutale vers l'avant, de façon à l'empêcher de remplir sa fonction de maintien lorsque ladite partie mobile est projetée par inertie en position de déverrouillage, ceci afin de permettre le blocage de ladite partie mobile, lors de son retour en arrière, en position extrême de réglage avant.

Dans cette description, les termes de positionnement dans l'espace (haut, bas, dessus, dessous, longitudinal, transversal, latéral, avant, arrière, ...) sont pris en référence à l'appui-tête disposé dans le véhicule en position d'utilisation.

Avec l'agencement proposé, le retour de la partie mobile en position extrême de réglage arrière ne peut se faire de façon non souhaitée lorsque le véhicule est l'objet d'un accident provoquant sa décélération brutale.

En effet, en cas de décélération brutale du véhicule, la masselotte est projetée vers l'avant, ce qui a pour effet d'empêcher le moyen de maintien de remplir sa fonction.

La partie mobile se verrouille alors lors de son retour en arrière en position extrême de réglage avant, ce qui permet d'optimiser la sécurité de l'occupant du siège, le coussin de l'appui-tête se trouvant au plus près de la tête du passager.

On notera que, dans le cas où la partie mobile n'était pas réglée, avant l'accident, en position extrême de réglage avant, elle se retrouve lors de l'accident dans cette position qui est la plus à même d'optimiser la sécurité de l'occupant.

D'autres particularités et avantages de l'invention apparaîtront dans la description qui suit, faite en référence aux figures jointes dans lesquelles :

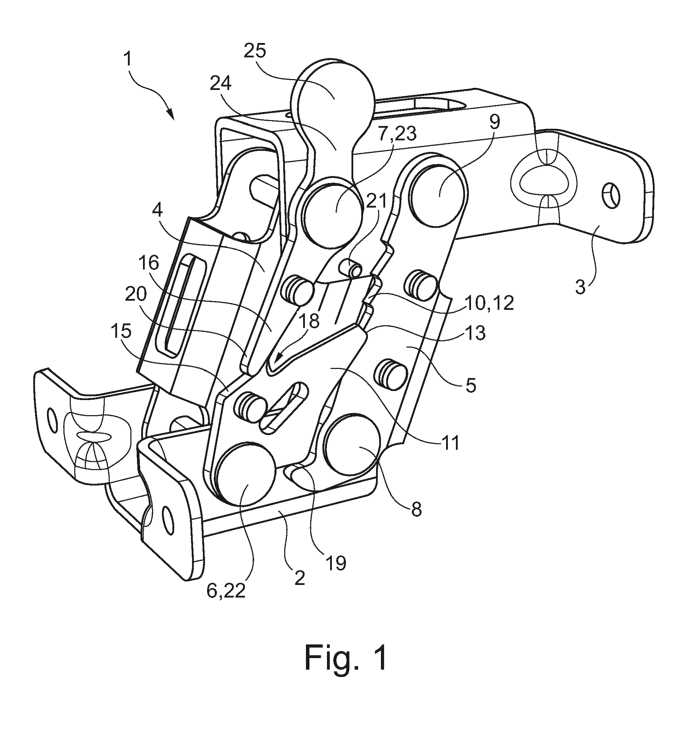

- La figure 1 est une vue en perspective d'une armature d'appui-tête selon une réalisation,
- Les figures 2 sont des vues schématiques latérales de la réalisation de la figure 1 avec la partie mobile disposée :
   - en position extrême de réglage arrière (2a),
   - en position extrême de réglage avant (2b),
   - par action de l'utilisateur, en position située au delà de la position extrême de réglage avant (2c),
   - du fait de l'inertie occasionnée par une décélération brutale du véhicule, en position située au delà de la position extrême de réglage avant (2d).

En référence aux figures, on décrit un appui-tête de siège de véhicule automobile, ledit appui-tête comprenant une armature 1, ladite armature comprenant une base 2 et une partie mobile 3 solidaire d'un coussin d'appui, ladite partie mobile étant reliée à ladite base par un dispositif de réglage selon une pluralité de positions longitudinales s'étendant entre une position extrême arrière et une position extrême avant, ledit dispositif étant agencé pour permettre, par traction exercée par l'utilisateur, le coulissement vers l'avant de ladite partie mobile et pour empêcher, au moyen d'une pièce de blocage 11 s'appuyant sur une rampe 10, un retour de ladite partie mobile vers l'arrière, ledit dispositif étant en outre agencé de sorte que ladite partie mobile puisse être tirée vers une position de déverrouillage située au delà de la position extrême avant, la mise en position de déverrouillage activant un moyen de maintien 16 de ladite pièce de blocage à distance de ladite rampe, de manière à permettre un retour de ladite partie mobile en position extrême arrière, ledit moyen de maintien étant pourvu d'une masselotte 25 d'inertie agencée pour le déplacer en cas de décélération brutale vers l'avant, de façon à l'empêcher de remplir sa fonction de maintien lorsque ladite partie mobile est projetée par inertie en position de déverrouillage, ceci afin de permettre le blocage de ladite partie mobile, lors de son retour en arrière, en position extrême de réglage avant.

Selon la réalisation représentée, le dispositif de réglage comprend :
- une bielle arrière 4 et une bielle avant 5 reliant la partie mobile 3 à la base 2, lesdites bielles étant montées selon un premier 6 et un deuxième 7 axe transversaux disposés respectivement en bas et en haut de ladite bielle arrière et un troisième 8 et un quatrième 9 axe transversaux disposés respectivement en bas et en haut de ladite bielle avant, de manière à permettre une translation longitudinale de ladite partie mobile,
- une zone crantée formant la rampe 10 disposée sur une desdites bielles,
- un verrou formant la pièce de blocage 11, ledit verrou étant agencé pour coopérer avec les crans 12 de ladite zone crantée de manière à définir une pluralité de positions de réglage longitudinal de ladite partie mobile, ledit verrou étant monté en rotation selon un cinquième axe 22 transversal, ledit verrou comprenant une saillie 13 de crantage avec lesdits crans,
- un premier moyen ressort actionnant ledit verrou vers ladite zone crantée de manière à réaliser le crantage,
- un doigt formant le moyen de maintien 16, ledit doigt glissant sur une zone 15 de glissement prévue sur ledit verrou, ledit doigt étant monté en rotation selon un sixième axe 23 transversal,
- un deuxième moyen ressort actionnant ledit doigt vers ladite zone de glissement,
- une encoche 18 prévue sur ladite zone de glissement,
- une zone d'appui 19 prévue sur ladite bielle avant, ladite zone d'appui étant agencée pour repousser ledit verrou vers l'arrière lorsque ladite partie mobile est avancée en position de déverrouillage, de sorte que l'extrémité libre 20 dudit doigt s'introduise dans ladite encoche pour empêcher un retour dudit verrou vers ladite zone crantée,
- une butée 21 disposée sur ladite partie mobile de manière à venir en appui contre ledit doigt lors du retour de ladite partie mobile en position extrême arrière, afin de dégager ladite extrémité libre de ladite encoche et libérer l'actionnement par ledit premier moyen ressort dudit verrou vers ladite zone crantée,
- une extension 24 prolongeant ledit doigt, à l'opposé de ladite extrémité libre par rapport audit sixième axe, ladite extension étant pourvue d'une masselotte 25 d'inertie disposée à distance dudit sixième axe, de sorte qu'une décélération brutale du véhicule s'accompagne d'une projection de ladite masselotte vers l'avant qui empêche ladite extrémité libre de se mettre dans ladite encoche lorsque ladite partie mobile est projetée par inertie en position de déverrouillage.

Les deux positions extrêmes de réglage arrière et avant correspondant à deux crans 12 extrêmes de la zone crantée 10.

Le fait d'intégrer la zone crantée 10 à une bielle 4,5 présente l'avantage de limiter le nombre de composants utilisés.

Selon une réalisation, l'appui-tête 1 comprend en outre un troisième moyen ressort actionnant la partie mobile 3 vers l'arrière.

Avec l'agencement selon l'invention, l'utilisateur peut, en réalisant une traction de la partie mobile 3 vers l'avant à partir de la position extrême de réglage avant, désactiver le verrou 11.

Lorsque l'utilisateur relâche l'appui-tête, la partie mobile 3 est alors actionnée vers l'arrière sous l'action du troisième moyen ressort.

Lorsque la butée 21 vient en appui contre le doigt 16, l'extrémité libre 20 se dégage de l'encoche 18 et le verrou 11 peut à nouveau jouer son rôle.

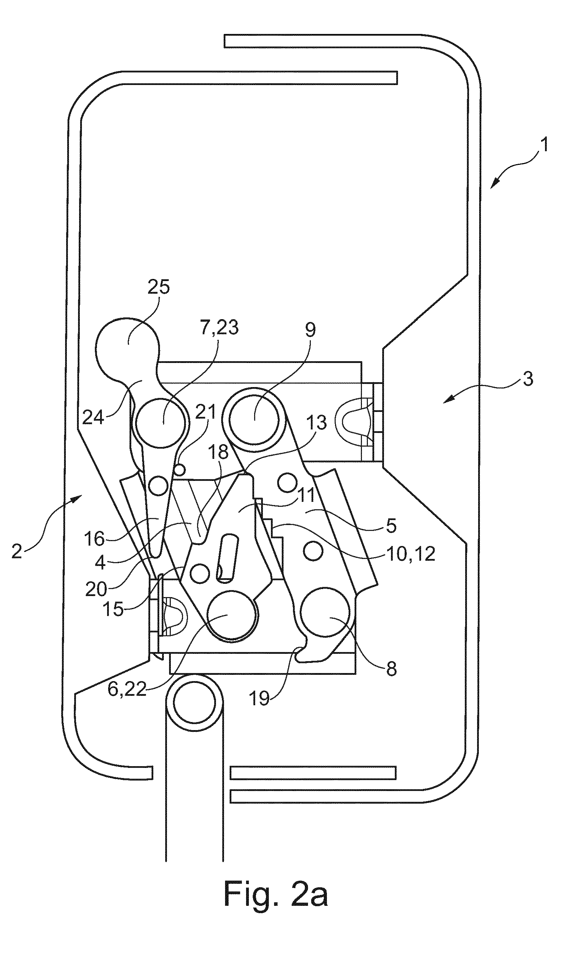

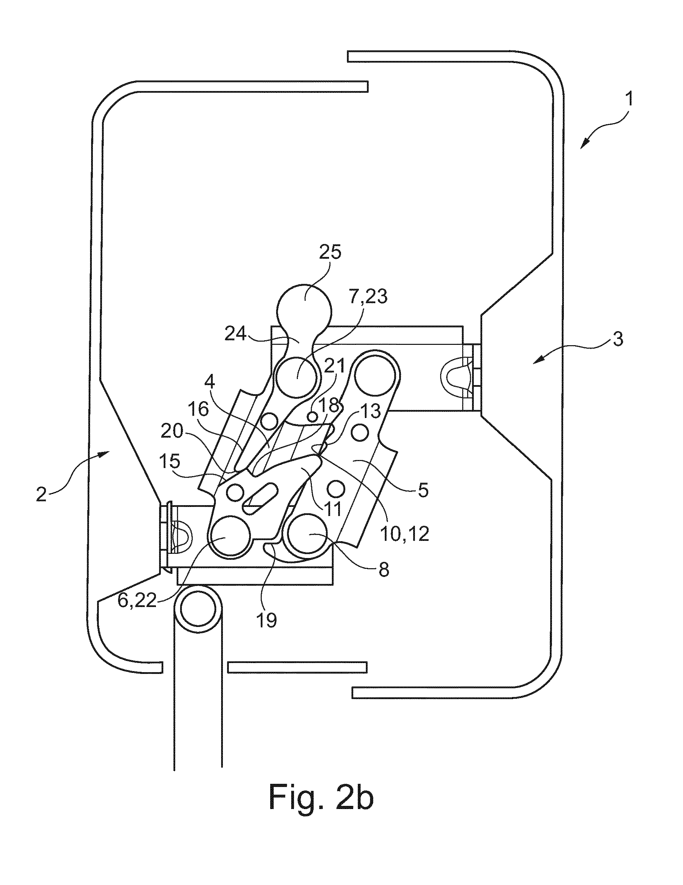

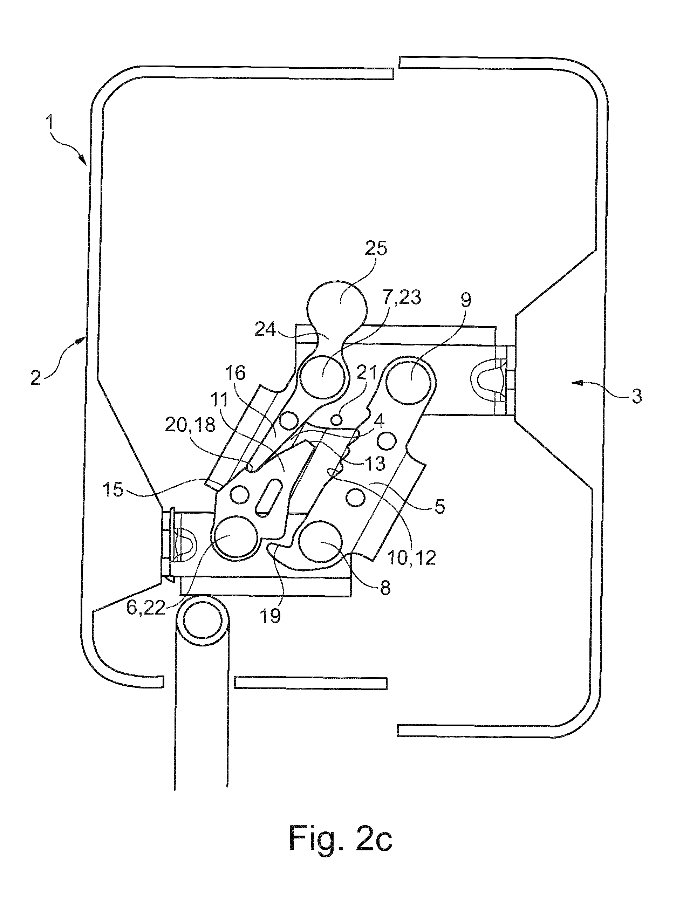

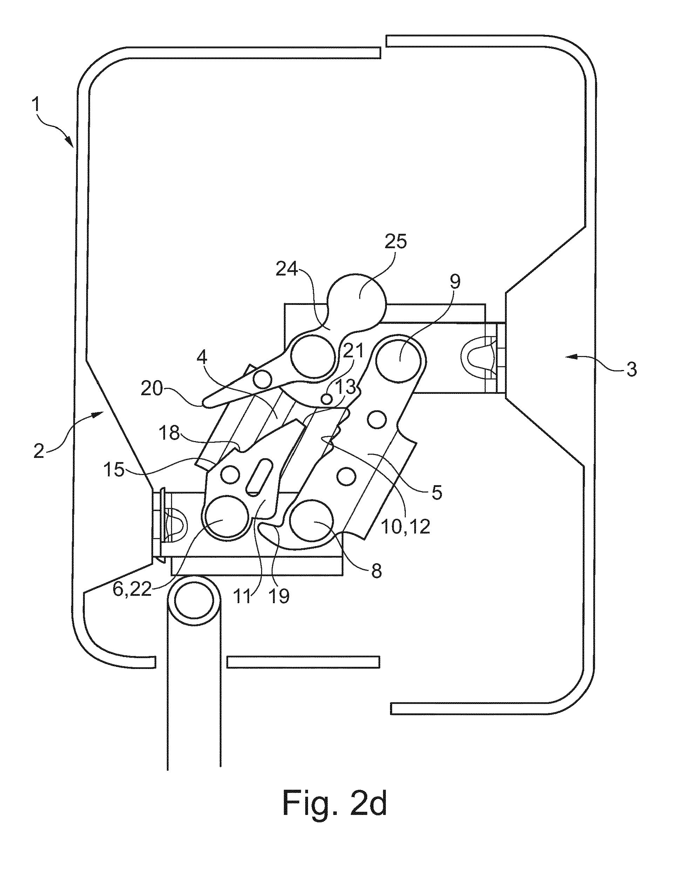

On se retrouve ainsi dans la situation de crantage correspondant à la figure 2a et l'utilisateur peut à nouveau régler la position longitudinale de l'appui-tête.

En cas de décélération brutale du véhicule, la partie mobile 3 est susceptible d'être projetée par inertie vers l'avant,

Avec l'agencement prévu, la masselotte 25 est elle aussi projetée vers l'avant, ce qui a pour effet d'empêcher l'extrémité libre 20 du doigt 16 de se mettre dans l'encoche 18, et ainsi de permettre un retour du verrou 11 vers la zone crantée 10 lors du retour de la partie mobile 3 en position extrême de réglage avant.

La partie mobile 3 se verrouille alors en position extrême de réglage avant, le coussin de l'appui-tête se trouvant au plus près de la tête du passager.

Selon la réalisation représentée, les bielles 4,5 sont montées en parallélogramme, ce qui permet de conserver « l'assiette » de la partie mobile 3 dans les différentes positions de réglage.

Selon une réalisation, le troisième moyen ressort, est disposé autour du troisième axe 8.

Selon la réalisation représentée, le cinquième axe 22 est confondu avec le premier axe 6.

Selon la réalisation représentée, le sixième axe 23 est confondu avec le deuxième axe 7.

Avec les agencements décrits ci-dessus, on utilise seulement quatre axes transversaux pour réaliser l'ensemble des fonctionnalités attendues, ce qui limite d'autant les dispersions dimensionnelles.

Selon la réalisation représentée, la zone crantée 10 est disposée sur la bielle avant 5.

Selon la réalisation représentée, les bielles 4,5 sont sous forme de plaques métalliques repliées en U, la zone crantée 10 étant disposée sur une des branches de U de la bielle avant 5.

Bien entendu, la réalisation décrite ici n'est pas limitative, un certain nombre de variantes pouvant être réalisées :
- partie mobile disposée en dessous de la base et zone crantée disposée sur la bielle arrière,
- partie mobile disposée au dessus de la base et zone crantée disposée sur la bielle arrière,
- partie mobile disposée en dessous de la base et zone crantée disposée sur la bielle avant,
- etc...

## Revendications

1. Appui-tête de siège de véhicule automobile, ledit appui-tête comprenant une armature (1), ladite armature comprenant une base (2) et une partie mobile (3) solidaire d'un coussin d'appui, ladite partie mobile étant reliée à ladite base par un dispositif de réglage selon une pluralité de positions longitudinales s'étendant entre une position extrême arrière et une position extrême avant, ledit dispositif étant agencé pour permettre, par traction exercée par l'utilisateur, le coulissement vers l'avant de ladite partie mobile et pour empêcher, au moyen d'une pièce de blocage (11) s'appuyant sur une rampe (10), un retour de ladite partie mobile vers l'arrière, ledit dispositif étant en outre agencé de sorte que ladite partie mobile puisse être tirée vers une position de déverrouillage située au delà de la position extrême avant, la mise en position de déverrouillage activant un moyen de maintien (16) de ladite pièce de blocage à distance de ladite rampe, de manière à permettre un retour de ladite partie mobile en position extrême arrière, ledit appui-tête étant **caractérisé en ce que** ledit moyen de maintien est pourvu d'une masselotte (25) d'inertie agencée pour le déplacer en cas de décélération brutale vers l'avant, de façon à l'empêcher de remplir sa fonction de maintien lorsque ladite partie mobile est projetée par inertie en position de déverrouillage, ceci afin de permettre le blocage de ladite partie mobile, lors de son retour en arrière, en position extrême de réglage avant.

2. Appui-tête selon la revendication 1, **caractérisé en ce que** le dispositif de réglage comprend :
• une bielle arrière (4) et une bielle avant (5) reliant la partie mobile (3) à la base (2), lesdites bielles étant montées selon un premier (6) et un deuxième (7) axe transversaux disposés respectivement en bas et en haut de ladite bielle arrière et un troisième (8) et un quatrième (9) axe transversaux disposés respectivement en bas et en haut de ladite bielle avant, de manière à permettre une translation longitudinale de ladite partie mobile,
• une zone crantée formant la rampe (10) disposée sur une desdites bielles,
• un verrou formant la pièce de blocage (11), ledit verrou étant agencé pour coopérer avec les crans (12) de ladite zone crantée de manière à définir une pluralité de positions de réglage longitudinal de ladite partie mobile, ledit verrou étant monté en rotation selon un cinquième axe (22) transversal, ledit verrou comprenant une saillie (13) de crantage avec lesdits crans,
• un premier moyen ressort actionnant ledit verrou vers ladite zone crantée de manière à réaliser le crantage,
• un doigt formant le moyen de maintien (16), ledit doigt glissant sur une zone (15) de glissement prévue sur ledit verrou, ledit doigt étant monté en rotation selon un sixième axe (23) transversal,
• un deuxième moyen ressort actionnant ledit doigt vers ladite zone de glissement,
• une encoche (18) prévue sur ladite zone de glissement,
• une zone d'appui (19) prévue sur ladite bielle avant, ladite zone d'appui étant agencée pour repousser ledit verrou vers l'arrière lorsque ladite partie mobile est avancée en position de déverrouillage, de sorte que l'extrémité libre (20) dudit doigt s'introduise dans ladite encoche pour empêcher un retour dudit verrou vers ladite zone crantée,
• une butée (21) disposée sur ladite partie mobile de manière à venir en appui contre ledit doigt lors du retour de ladite partie mobile en position extrême arrière, afin de dégager ladite extrémité libre de ladite encoche et libérer l'actionnement par ledit premier moyen ressort dudit verrou vers ladite zone crantée,
• une extension (24) prolongeant ledit doigt, à l'opposé de ladite extrémité libre par rapport audit sixième axe, ladite extension étant pourvue d'une masselotte (25) d'inertie disposée à distance dudit sixième axe, de sorte qu'une décélération brutale du véhicule s'accompagne d'une projection de ladite masselotte vers l'avant qui empêche ladite extrémité libre de se mettre dans ladite encoche lorsque ladite partie mobile est projetée par inertie en position de déverrouillage.

3. Appui-tête selon la revendication 2, **caractérisé en ce qu'il** comprend en outre un troisième moyen ressort actionnant la partie mobile (3) vers l'arrière.

4. Appui-tête selon la revendication 2 ou 3, **caractérisé en ce que** les bielles (4,5) sont montées en parallélogramme.

5. Appui-tête selon l'une quelconque des revendications 2 à 4, **caractérisé en ce que** le cinquième axe (22) est confondu avec le premier axe (6).

6. Appui-tête selon l'une quelconque des revendications 2 à 5, **caractérisé en ce que** le sixième axe (23) est confondu avec le deuxième axe (7).

7. Appui-tête selon l'une quelconque des revendications 2 à 6, **caractérisé en ce que** la zone crantée (10) est disposée sur la bielle avant (5).

8. Appui-tête selon la revendication 7, **caractérisé en ce que** les bielles (4,5) sont sous forme de plaques métalliques repliées en U, la zone crantée (10) étant disposée sur une des branches de U de la bielle avant (5).

## Patentansprüche

1. Kopfstütze für Kraftfahrzeug, wobei die Kopfstütze eine Bewehrung (1) umfasst, wobei die Bewehrung eine Basis (2) und einen beweglichen Teil (3), der fest mit einem Stützkissen verbunden ist, umfasst, wobei der bewegliche Teil mit der Basis durch eine Einstellvorrichtung gemäß mehreren Längspositionen verbunden ist, die sich zwischen einer hinteren Endposition und einer vorderen Endposition erstrecken, wobei die Vorrichtung eingerichtet ist, um durch Zug, der von dem Benutzer ausgeübt wird, das Vorwärtsgleiten des beweglichen Teils zu erlauben, und um mittels eines Blockierungsteils (11), das sich auf eine Rampe (10) stützt, eine Rückkehr des beweglichen Teils nach hinten zu verhindern, wobei die Vorrichtung außerdem derart angeordnet ist, dass der bewegliche Teil zu einer Entriegelungsposition gezogen werden kann, die über die vordere Endposition hinaus liegt, wobei das Stellen auf Entriegelungsposition ein Haltemittel (16) des Blockierungsteils von der Rampe beabstandet aktiviert, so dass eine Rückkehr des beweglichen Teils in hintere Endposition erlaubt wird, Kopfstütze **dadurch gekennzeichnet, dass** das Haltemittel mit einem Trägheitsgewicht (25) versehen ist, das eingerichtet ist, um es im Fall plötzlichen Verlangsamens derart nach vorn zu verlagern, dass es daran gehindert wird, seine Haltefunktion zu erfüllen, wenn der bewegliche Teil trägheitsbedingt in Entriegelungsposition geschleudert wird, um das Blockieren des beweglichen Teils bei seiner Rückkehr nach hinten in vordere Endposition der vorderen Einstellung zu erlauben.

2. Kopfstütze nach Anspruch 1, **dadurch gekennzeichnet, dass** die Einstellvorrichtung Folgendes umfasst:
- ein hinteres Pleuel (4) und ein vorderes Pleuel (5), die den beweglichen Teil (3) mit der Basis (2) verbinden, wobei die Pleuel entlang einer ersten (6) und einer zweiten (7) Querachse montiert sind, die jeweils unterhalb und oberhalb des hinteren Pleuels angeordnet sind, und eine dritte (8) und eine vierte (9) Querachse, die jeweils unterhalb und oberhalb des vorderen Pleuels derart angeordnet sind, dass sie eine Längsverschiebung des beweglichen Teils erlauben,
- eine Rastenzone, die die Rampe (10) bildet, die auf einem der Pleuel angeordnet ist,
- einen Riegel, der das Blockierungsteil (11) bildet, wobei der Riegel eingerichtet ist, um mit den Rasten (12) der Rastenzone derart zusammenzuwirken, dass mehrere Längseinstellpositionen des beweglichen Teils definiert sind, wobei der Riegel in Drehung gemäß einer fünften Querachse (22) montiert ist, wobei der Riegel einen Einrastvorsprung (13) mit den Rasten umfasst,
- ein erstes Federmittel, das den Riegel zu der Rastenzone derart betätigt, dass das Einrasten ausgeführt wird,
- einen Finger, der das Haltemittel (16) bildet, wobei der Finger auf einer Gleitzone (15) gleitet, die auf dem Riegel vorgesehen ist, wobei der Finger in Drehung gemäß einer sechsten Querachse (23) montiert ist,
- ein zweites Federmittel, das den Finger zu der Gleitzone betätigt,
- eine Kerbe (18), die auf der Gleitzone vorgesehen ist,
- eine Auflagezone (19), die auf dem vorderen Pleuel vorgesehen ist, wobei die Auflagezone eingerichtet ist, um den Riegel nach hinten zurückzuschieben, wenn der bewegliche Teil in Entriegelungsposition vorgefahren wird, so dass sich das freie Ende (20) des Fingers in die Kerbe fügt, um die Rückkehr des Riegels zu der Rastenzone zu verhindern,
- einen Anschlag (21), der auf dem beweglichen Teil derart angeordnet ist, dass er bei der Rückkehr des beweglichen Teils in hintere Endposition gegen den Finger zum Anliegen kommt, um das freie Ende aus der Kerbe zu befreien und die Betätigung des Riegels zu der Rastenzone durch das erste Federmittel freizugeben,
- eine Erweiterung (24) die den Finger entgegensetzt zu dem freien Ende in Bezug auf die sechste Achse verlängert, wobei die Erweiterung mit einem Trägheitsgewicht (25) versehen ist, das von der sechsten Achse beabstandet angeordnet ist, so dass eine plötzliche Verlangsamung des Fahrzeugs von einem Vorwärtsschleudern des Gewichts begleitet ist, das das freie Ende hindert, sich in die Kerbe zu fügen, wenn der bewegliche Teil trägheitsbedingt in Entriegelungsposition geschleudert wird.

3. Kopfstütze nach Anspruch 2, **dadurch gekennzeichnet, dass** sie außerdem ein drittes Federmittel umfasst, das den beweglichen Teil (3) nach hinten betätigt.

4. Kopfstütze nach Anspruch 2 oder 3, **dadurch gekennzeichnet, dass** die Pleuel (4, 5) im Parallelogramm montiert sind.

5. Kopfstütze nach einem der Ansprüche 2 bis 4, **dadurch gekennzeichnet, dass** die fünfte Achse (22) mit der ersten Achse (6) zusammenfällt.

6. Kopfstütze nach einem der Ansprüche 2 bis 5, **dadurch gekennzeichnet, dass** die sechste Achse (23) mit der zweiten Achse (7) zusammenfällt.

7. Kopfstütze nach einem der Ansprüche 2 bis 6, **dadurch gekennzeichnet, dass** die Rastenzone (10) auf dem vorderen Pleuel (5) angeordnet ist.

8. Kopfstütze nach Anspruch 7, **dadurch gekennzeichnet, dass** die Pleuel (4, 5) die Form metallischer Platten haben, die als U gefaltet sind, wobei die Rastenzone (10) auf einem der U-Schenkel des vorderen Pleuels (5) angeordnet ist.

## Claims

1. Motor vehicle seat headrest, said headrest comprising a frame (1), said frame comprising a base (2) and a movable portion (3) integral with a support cushion, said movable portion being connected to said base by an adjustment device in a plurality of longitudinal positions extending between a rear end position and a front end position, said device being arranged to allow, by traction exerted by the user, the forward sliding of said movable portion and to prevent, by means of a locking part (11) bearing against a ramp (10), a return of said movable portion rearwardly, said device being further arranged so that said movable portion can be pulled to an unlocked position located beyond the front end position, with the putting into unlocked position activating a means (16) for holding said locking part away from said ramp, so as to allow a return of said movable portion to the rear end position, said headrest being **characterised in that** said holding means is provided with an inertia flyweight (25) arranged to move it in case of abrupt deceleration forward, so as to prevent it from fulfilling its holding function when said movable portion is projected by inertia in the unlocked position, in order to allow locking of said movable portion, during its return to the rear, in the forward end position adjustment.

2. Headrest according to claim 1, **characterised in that** the adjustment device comprises:
- a rear connecting rod (4) and a front connecting rod (5) connecting the movable portion (3) to the base (2), said connecting rods being mounted about a first (6) and a second (7) transverse axes arranged respectively at the bottom and at the top of said rear connecting rod and a third (8) and fourth (9) transverse axes arranged respectively at the bottom and at the top of said front connecting rod so as to allow longitudinal translation of said movable portion,
- a notched area forming the ramp (10) arranged on one of said connecting rods,
- a lock forming the locking part (11), said lock being arranged to cooperate with the notches (12) of said notched area so as to define a plurality of longitudinal adjustment positions of said movable portion, said lock being mounted in rotation about a fifth transverse axis (22), said lock comprising a projection (13) for notching with said notches,
- a first spring means actuating said lock to said notched area so as to realise the notching,
- a finger forming the holding means (16), said finger sliding over a sliding area (15) provided on said lock, said finger being mounted in rotation about a sixth transverse axis (23),
- a second spring means actuating said finger to said sliding area,
- a slot (18) provided on said sliding area,
- a support area (19) provided on said front connecting rod, said support area being arranged to urge said lock rearwardly when said movable portion is advanced in unlocked position, so that the free end (20) of said finger is introduced into said slot to prevent a return of said lock to said notched area,
- a stop (21) arranged on said movable portion so as to bear against said finger upon return of said movable portion in the rear end position, in order to disengage said free end of said slot and release the actuation by said first spring means of said lock to said notched area,
- an extension (24) extending said finger, opposite said free end with respect to said sixth axis, said extension being provided with an inertia flyweight (25) arranged at a distance from said sixth axis, so that abrupt deceleration of the vehicle is accompanied by a projection of said flyweight forward which prevents said free end from being placed in said slot when said movable portion is projected by inertia in the unlocked position.

3. Headrest according to claim 2, **characterised in that** it further comprises a third spring means actuating the movable portion (3) rearward.

4. Headrest according to claim 2 or 3, **characterised in that** the connecting rods (4, 5) are mounted in a parallelogram.

5. Headrest according to any one of claims 2 to 4, **characterised in that** the fifth axis (22) coincides with the first axis (6).

6. Headrest according to any one of claims 2 to 5, **characterised in that** the sixth axis (23) coincides with the second axis (7).

7. Headrest according to any one of claims 2 to 6, **characterised in that** the notched area (10) is arranged on the front connecting rod (5).

8. Headrest according to claim 7, **characterised in that** the connecting rods (4, 5) are in the form of metal plates bent in a U shape, with the notched area (10) being arranged on one of the branches of the U shape of the front connecting rod (5).
